# EUROPEAN PATENT APPLICATION

(11) **EP 0 549 504 A2**
(43) Date of publication of application: **30.06.1993**
(21) Application number: 92480117.8
(22) Date of filing: 14.08.1992
(51) Int. Cl.: G06F 15/16, H04L 29/06, G06F 9/46

(54) **Process control for real time systems**

(30) Priority: 09.10.1991 US 757101
(71) Applicant: International Business Machines Corporation, Armonk, N.Y. 10504 (US)
(72) Inventor: Finkel, Allan, New City, NY 10956 (US); DiLeonardo, Charlotte Spier, Raleigh, NC 27615 (US); Calo, Seraphin Bernard, Peekskill, NY 10556 (US); Milliken, Keith Robert, Pacific Palisades, CA 90271 (US)
(74) Representative: de Pena, Alain

(57) **Abstract**

A technique is provided for controlling and managing processes or systems such as a communications network. The process or system is modelled in memory in object oriented form. Each resource of the process of system has a corresponding field in the model which can be composed of data and executable code. Inter-relationships between fields within the model are designed to correspond relationships between the resources in the process or system. When the system or process changes, this change is communicated to the model, causing changes to be made in the data in the corresponding fields and possibly causing the execution of code to cause corresponding changes to associated interrelated resources in the process or system and their corresponding fields within the model. In this way, a reel time model of the process or system is maintained, and changes to the process or system can be addressed directly to the model, which will provide the appropriate changes to the process or system.

## Description

The present invention relates to a data cache manager for use in controlling real time systems. More particularly, the present invention relates to a data cache manager which models an active process or system in real time and interacts interactively with outside programs or applications or operates independently to effect dynamic control of the process or system in real time.

It is, of course, not new to use computers and computer programs to control a process such as a manufacturing process or to monitor a system such as an information network. Complicated processes or systems often have a large number of control applications or programs operating to control different portions thereof. However, technology is still embryonic when it comes to monitoring and coordinating control a complicated process or system with a technique that monitors, coordinates and responds to changes in the process or system in substantially real time.

For example, in network management, network manager programs resident in a computer can graphically illustrate to an operator the components of the network. Also, such programs can provide alerts to an operator when a component of the network informs the network manager program that something is wrong with the network or a component thereof. Additionally, to a limited extent, network manager programs can respond to an alert by triggering some programming that carries out a response for a given alert. However, the responses available are quite limited in scope and typically cause further changes to a network which are not accounted for unless another alert is generated. Also, any domino effect relative to the initial alert or caused by any response is not automatically accounted for, as the current design of network manager programs do not provide the capacity or speed necessary to account for, deal with, or react to any such situations. Also, independent programs or applications commonly interact directly with a given component of the process or network to effect control of a process or a network. Alerts caused by changes caused by this control typically are seen by the manager and some limited action can be taken by the manager in response. Such management is indirect and decentralized and can have effects on the process that cannot be addressed by the operator event if the operator is informed about it by the manager program.
Due to all of this disjoint control and monitoring activity and given the lack of coordination and disregard for cause and effect problems, a need has developed for a more responsive and more powerful monitor/controller.

Accordingly, one object of the present invention is to provide a data cache manager which maintains real time data and includes process control applications.
Another object of the present invention is to provide a data cache which interacts with real devices to maintain their state consistent with that represented in the data cache.
Yet another object of the present invention is to provide a technique to store and maintain operations and status data in a dynamic systems management environment.
Still another object of the present invention is to provide such a system which is capable of being exploited by applications or programs to effect changes to or control of resources of the process without significant performance penalty.
A still further object of the present invention is to provide a cache data manager which incorporates application defined logic that can be actuated by changes in data values.
Other objects and advantages of the present invention will be set forth in part in the description of the drawings which follow and, in part, will be obvious from the description or may be learned by practice of the invention. In summary, the present invention provides an interactive model of a process or system. Changes to the resources of the process or system,are relayed to the model, which then takes the appropriate steps and invokes processes in the form of executable code in accordance with pre-determined and pre-specified programming. Inter-related objects are informed of the changes and additional changes to the inter-related objects made as necessary. Applications which employ the objects can be notified of these changes to the objects, and the changes to inter-related objects are implemented in the system or process as required. The structure of the data model permits users to readily update the process control manager as required by changes to the process or system. Objects can be added or deleted, information and executable code within data fields changed modified or updated as necessary, inter-relationships between objects changed, etc. In this way, process control is provided in real time, with the actual system in process and the data model being interchangeable for purposes of affecting change to process or system.
The present invention will now be described with reference to the following drawings, in which like reference numbers denote the same elements throughout.
Figure 1 is a block diagram of a network environment in which the present invention can be implemented ;
Figure 2 is a block diagram illustrating the relationship between a process control manager according to the present invention and network manager and applications resident in a host ;
Figure 3 is a block diagram illustrating how data is structured within the process control manager ; and
Figure 4 is a diagram illustrating the relationship between executable code stored in the process control manager with outside applications and the process being controlled.

The present invention will now be described in a network management environment, although it should be understood that the process control manager described herein can be employed to monitor and manage any process or system capable of being modelled in cache memory, including electrical generating facilities, manufacturing lines, elevator banks, etc.

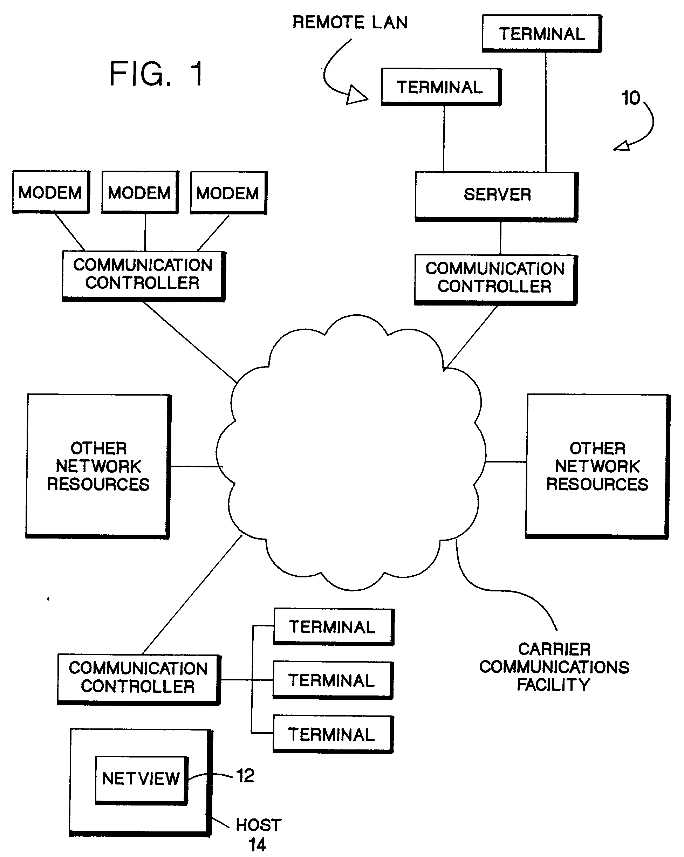

Figure 1 illustrates a simplified network 10 and its connection to a known network manager 12 such as Netview, which is a registered trademark of the IBM Corporation. Typically, the network manager 12 resides in a host 14 and the resources of a network provide alerts to the host 14 which are received and interpreted by the network manager 12 in accordance with known techniques. The resources of a network can include a plurality of individual workstations, personal computers, modems, applications resident in host computers, communications satellites, and the like. The concept of a network implies communication ; as such it is well known that the resources of the network send status reports in the form of alerts to the network manager. However, heretofore the ability of the network manager to respond has been limited.
In contrast, a process control manager of the present invention is designed to be interactive with the resources of the network and provide a central control location for applications that wish to somehow manipulate resources of the network. Like the network manager, a process control manager resides in memory of a host computer which is employed to operate the network.

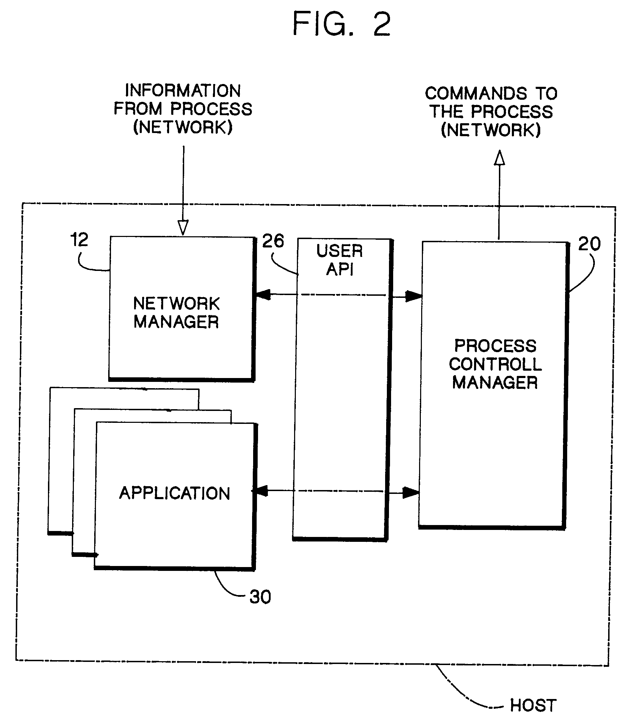

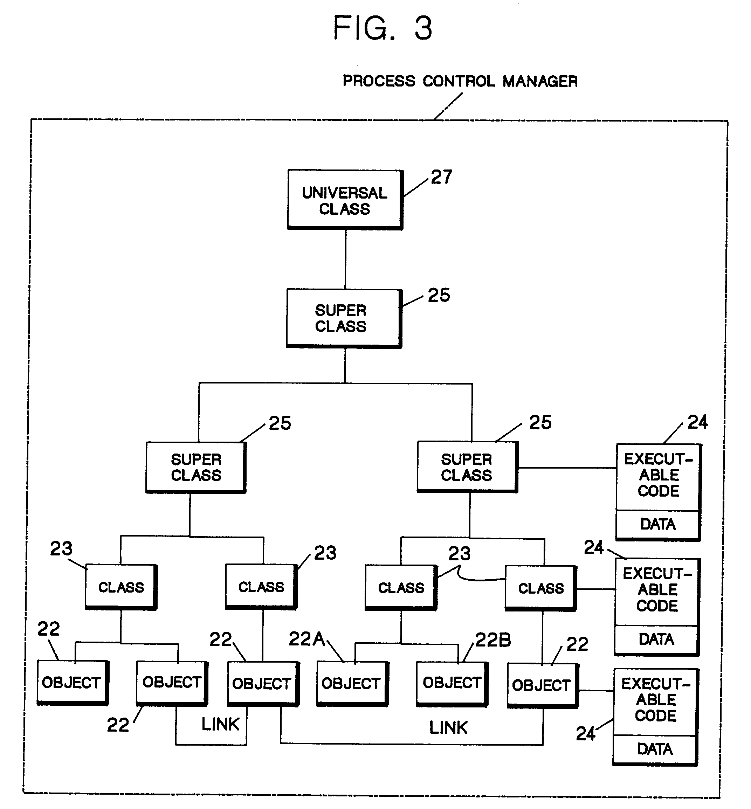

The architecture of a process control manager 20 will now be described with reference to Figures 2-4. The entire network is modelled in memory, such as cache memory in the manager 20. The process control manager 20 includes a user API 26 which controls access to the process control manager 20. In the present embodiment, communication between a network manager 12 and the process control manager 20 and automation applications 30 are carried out through the suer API 26. This user API 26 provides an appropriate interface so that multiple automation applications 30 can access the process control manager 20. As we explain below, the network is actually modelled within the process control manager 20. The present invention permits applications 30 to effect changes to the network by addressing the process control manager 20. The change will be instantly made of the data model, and the data control manager 20 will cause the change to be implemented to the network. Additionally, a change made by an application 30 to one resource of the network which affects the other resource of the network will be immediately known and accounted for since the model of the network within the data cache manager accounts for these inter-relationships. This is achieved in the following way. The process control manager 20 employs an object oriented approach to data organization. Data is organized around entities called objects 22 (Fig. 3). Information about an object 22, such as its status, may be stored in data fields 24 associated with the object 22. Relationships between objects 22 are explicitly represented as either links between objects or other objects. In a process control application, objects may represent actual physical objects. Data fields for the objects are defined by the user to mirror the actual functioning of the process being modelled.
Figure 3 illustrates a data structure included within the memory of the process control manager 20. Such a structure can be described as a collection of data items contained in logical groupings in the form of a tree. These data items are associated with fields 24 within the memory of the process control manager 20. Fields are records of information within the memory. These fields 29 are unique in that they are divided into a number of sub-fields which can contain data and logic in the form of executable code. The objects 22 are the basic unit of data items in the process control manager 20. As discussed, each object 22 has associated therewith or is actually composed of the fields 24 which contain data about and executable code relative to its objects 22. This data structure is organized into a structure composed of objects, classes and super classes. Classes and super classes provide the definitional framework for organizing and defining the fields of an object, and provide inheritable data fields for each of their associated sub classes and objects. As mentioned, only an object can represent a single resource of the process being controlled, and in networks an object can represent processors, applications which control communication and data flow within a network, such as VTAM (which is a trademark of the IBM Corporation), switches, control units, storage devices, printers, routes, sessions and modems. Objects organized into classes 33. Objects in the same class share the same data organization. Two objects of the same class have fields with the same data types. The structural organization of these fields is identical, i.e., the objects have the same structure. For example, objects 22A and 22B can be identical workstations, and there exists a one to one correspondence between the structure between the two objects. However, the corresponding fields of the two objects 22A and 22B may be used to store different data values, such as the different identity of the workstations.
The structure of an object is determined by the structure of the class to which the object belongs. Fields defined for a class automatically appear on all objects of that class. Further classes can also be defined. Although not shown, each object, class, super class 25, etc. includes a field 24, which will typically include data and may or may not include executable code. The structure of the data stored in the process control manager 20 can be referred to as a tree structure, and a number of classes which build upon each other can be employed. Typically, a class found higher in the tree than another class is referred to as a super class relative to that class. A super class provides a means of defining common fields once. This permits the common fields to be shared among different classes.
Thus, the data cache manager is organized into a tree structure hierarchy of super classes, classes, and objects. The only class without a parent or super class is referred to as a universal class 27, as it is the ancestor of every class in the tree. The universal class includes a field having data which is inherited by every class. Each tree has exactly one primary parent except for the universal class, which has none. Each class inherits structure from its super class. This makes the data easier to organize and define. In this way, structure can only be defined once at the super class level. This defined structure is then shared by all the different classes.

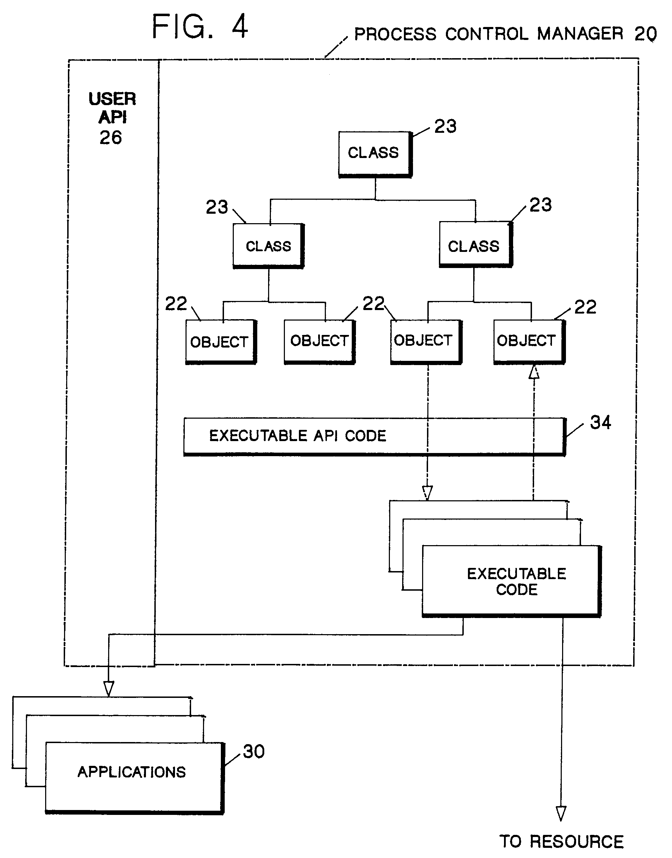

Figure 3 illustrates that objects 22 having an inter-relationship are linked within the model so that an object that would be affected by a change in another object will be informed of that change. The data field associated with the latter object will contain executable code which will take any necessary steps to account for that change to the related object. As illustrated in Figure 4, executable code can also be stored in the process control manager 20 that is not stored in one of the data fields 24. For example, it may be desired that an application 30 be notified of a change to an object. In this case, when the object 22 is changed, executable code within the process control manager 20 will be implemented using an appropriate API 34. The application 30 will then be notified of the change to the object via the user API upon the executable code being invoked. Execution of the executable code in response to a change in the object can also cause an appropriate command to be sent to the network resource represented by the object 22. Thus, if an application 30 desires a change to resource to occur, the application need only address this change to the object, the change to which will cause executable code to be implemented which sends the appropriate command to the resource. In this way, the model would then do process control manager 20 and the actual status of the resources in the network are maintained as identical. Further, due to the links between objects, executable code invoked on behalf of one object will cause the appropriate inter-related object to be notified of this change. The data field of the inter-related object may or may not cause executable code to be invoked in response to this change to the data field. If code is invoked, the process is continued. Applications 30 will be notified of the change to the inter-related object as pre-specified by the executable code, the status of the resource which corresponds to the inter-related object will be changed as necessary, and any further inter-related objects which are affected by this change will be notified.

## Claims

1. A system for managing and interacting with a system having a plurality of resources, comprising :
means (12) for receiving status signals relative to the resources of the system ;
means (20) for maintaining an object oriented model of the system, the model being composed of fields (24) having data corresponding to the resources of the system, wherein when said receiving means receives a signal from a resource of the system indicating a change in the resource, data in the fields corresponding to the resource is changed in the model.

2. A system according to claim 1, wherein said modelling means further comprises executable codes (24) associated with the fields, wherein the executable codes may be triggered when a change is made to data in a corresponding one of the fields.

3. A system according to claim 2, wherein said system further comprises applications (30) for modifying the system, said applications communicating with said modelling means to change data in the fields so as to trigger associated executable code associated with the field to cause the desired change to both the model and the system.
